# EUROPÄISCHE PATENTANMELDUNG

(11) **EP 2 570 931 A1**
(43) Veröffentlichungstag der Anmeldung: **20.03.2013**
(21) Anmeldenummer: 11181217.8
(22) Anmeldetag: 14.09.2011
(51) Int. Cl.: G06F 13/42

(54) **Verfahren zur asynchron-seriellen Datenübertragung mittels einer synchron-seriellen Schnittstelle**

(71) Anmelder: VEGA Grieshaber KG, 77709 Wolfach (DE)
(72) Erfinder: Kopp, Manfred, 77709 Wolfach (DE)
(74) Vertreter: Patentanwälte Westphal, Mussgnug & Partner

(57) **Zusammenfassung**

Die Erfindung betrifft ein Verfahren zur unidirektionalen asynchron-seriellen Datenübertragung mit einem asynchronen Datenformat mit F (F∈N) Rahmenbits zwischen einer Sendeschnittstelle (11) eines Datensendegerätes (10) und einem Datenempfangsgerät (20) mit einer einen asynchron-seriellen Dateneingang aufweisenden seriellen Empfangsschnittstelle (21); erfindungsgemäß ist vorgesehen, dass die Sendeschnittstelle als synchron-serielle Schnittstelle (11) mit wenigstens einer Datenleitung (12) ausgebildet ist, wobei die Datenleitung (12) mit dem asynchron-seriellen Dateneingang der Empfangsschnittstelle (21) verbunden wird, ein von dem Datensendegerät (10) zu übermittelndes Datenwort mit D (DEN) Datenbits zur Erzeugung eines dem asynchronen Datenformat entsprechenden Formats mit F Rahmenbits ergänzt wird, und das mit den Rahmenbits ergänzte Datenwort in ein Senderegister (11a) zur Übertragung an das Datenempfangsgerät (20)gespeichert wird.

## Beschreibung

Die Erfindung betrifft ein Verfahren zur unidirektionalen asynchron-seriellen Datenübertragung gemäß Oberbegriff des Patentanspruchs 1.

Die Kommunikation bzw. die Datenübertragung zwischen Mikrocomputern oder zwischen einem Mikrocomputer und einem Peripheriegerät erfolgt entweder parallel, bei welchem Daten parallel pro Dateneinheit jeweils empfangen und gesendet werden, oder seriell.

Bei einer seriellen Datenübertragung wird unterschieden zwischen einem synchron-seriellen Verfahren, bei welchem der Zeitablauf bzw. die Zeitsteuerung für eine Synchronisierung zwischen der Sendeseite und der Empfangsseite mittels eines von der Sendeseite bereitgestellten Taktsignals erfolgt und einem asynchron-seriellen Verfahren, bei welchem die Datenübertragung ohne ein Taktsignal vonstattengeht.

Eine serielle Datenübertragung, bspw. gemäß dem SPI-Protokoll erfolgt über drei Leitungen, nämlich über eine Sendeleitung (MOSI), eine Empfangsleitung (MISO) und eine Taktleitung (SCLK). Zusätzlich zu diesen drei Leitungen wird für jeden Slave eine Slave Select (SS) oder auch Chip Select (CS) genannte Leitung benötigt, durch die die Sendeeinheit als Master den Slave zur aktuellen Kommunikation selektiert.

Ein asynchron-serielles Datenformat stellt ein zeichenorientiertes Datenformat dar, bei dem jedes Datenwort vor der Übertragung mit Steuer- und Sicherungskennzeichen, wie Start-Bit, Stopp-Bit und/oder Paritäts-Bit versehen und zu einem einheitlichen Zeichenrahmen ergänzt wird. Die Zeitspanne zwischen zwei aufeinander folgenden Zeichenrahmen kann beliebig sein, denn jedes derart ergänzte Datenwort ist in sich abgeschlossen und die Formatierung (Synchronisation) mit jedem neuen Zeichenrahmen beginnt.

Für die Übertragung eines Datenwortes gemäß einem solchen asynchron-seriellen Datenformat, bspw. gemäß dem UART (Universal Asynchronous Receiver/Transmitter)-Standard wird dem zu übertragenden Datenwort ein Start-Bit am Anfang und ein Stopp-Bit am Ende als Steuerzeichen hinzugefügt. Das Start-Bit zeigt dem Empfänger an, dass ein Datenwort übertragen werden soll und der Empfänger sich auf die Datenübertragung synchronisieren kann. Für ein Datenbyte werden gemäß diesem UART-Standard ein Start-Bit, die 8 Datenbits und 1 bis 2 Stopp-Bits übertragen. Das zweite Stopp-Bit ist je nach Ausführung der UART-Schnittstelle nötig, wenn der Sender etwas schneller ist als der Empfänger.

Die wichtigste Anwendung des UART-Standards sind Schnittstellen wie RS232 oder RS485.

Beispielsweise kommen Datenübertragungen unter Anwendung des UART-Standards auch zwischen oder innerhalb von Geräten im Anwendungsbereich der Druck- oder Füllstandmesstechnik zum Einsatz wie z.B. in Sensoren, Aktoren, Feldgeräten, Messgeräten, Auswertgeräten, Kommunikationsgeräten und Bediengeräten.

Um asynchron-serielle Datenübertragungen durchzuführen, bspw. über eine RS232-Schnittstelle ist es bisher erforderlich, einen Mikroprozessor verbunden mit einer UART-Schnittstelle in ein Gerät einzubauen oder einen Mikrocontroller zu verwenden, der eine serielle Schnittstelle mit UART-Fähigkeiten beinhaltet. Dabei werden die zu übertragenden D Datenbits als Datenwort in ein Senderegister geschrieben, die dann von einer Hardware-Einheit automatisch um F Rahmenbits (framing-bits) ergänzt und in der festgelegten zeitlichen Abfolge zusammen als N Bits Über ein Schieberegister gesendet.

Wahlweise kann die asynchron-serielle Datenübertragung, wenn keine UART-Schnittstelle vorhanden ist, Bit-für-Bit mit Software ausgeführt werden, d.h. die Ansteuerung einer Ausgabeleitung mit den zu sendenden N Bit-Zuständen an durch das asynchrone Hardware-Protokoll festgelegten Zeitpunkten, auch "bit-banging" genannt. Nachteile einer Software-Lösung mit "bit-banging" sind zusätzlicher Programmspeicherbedarf, zusätzlich erforderliche Prozessorrechenleistung und zusätzliche Software-Fehlerquellen bei erhöhten Anforderungen an die Zuverlässigkeit.

Es ist Aufgabe der vorliegenden Erfindung, ein Verfahren zur unidirektionalen asynchron-seriellen Datenübertragung der eingangs genannten Art zu schaffen, das kein Datensendegerät mit einer UART-Schnittstelle erfordert und das nur einen geringen Softwareaufwand zu dessen Realisierung bedarf.

Diese Aufgabe wird gelöst durch ein Verfahren mit den Merkmalen des Patentanspruchs 1.

Ein solches Verfahren zur unidirektionalen asynchron-seriellen Datenübertragung mit einem asynchronen Datenformat mit F Rahmenbits zwischen einer Sendeschnittstelle eines Datensendegerätes und einem Datenempfangsgerät mit einer einen asynchron-seriellen Dateneingang aufweisenden seriellen Empfangsschnittstelle, zeichnet sich dadurch aus, dass die Sendeschnittstelle als synchron-serielle Schnittstelle mit wenigstens einer Datenleitung ausgebildet ist, wobei die Datenleitung mit dem asynchron-seriellen Dateneingang der Empfangsschnittstelle verbunden wird, ferner ein von dem Datensendegerät zu übermittelndes Datenwort mit D Datenbits zur Erzeugung eines dem asynchronen Datenformat entsprechenden Formats mit F Rahmenbits ergänzt wird, und anschließend das mit den Rahmenbits ergänzte Datenwort zur Übertragung an das Datenempfangsgerät in einem Senderegister gespeichert wird.

Mit diesem erfindungsgemäßen Verfahren erübrigt es sich für die Sendefähigkeit des Datensendegerätes, bspw. eines Mikrocomputers, eine Hardware-Schnittstelle mit asynchroner-serieller Datenübertragung einzurichten, wenn stattdessen eine Hardware-Schnittstelle mit synchron-serieller Datenübertragung vorhanden ist. Damit besteht die Möglichkeit einen Mikrocomputer oder Mikrocontroller als Datensendegerät einzusetzen, der keine asynchron-serielle Sendeschnittstelle, bspw. eine UART-Schnittstelle umfasst und somit kostengünstiger ist oder andere unverzichtbare Eigenschaften aufweist, ohne dass eine asynchron-serielle Datenübertragung in Senderichtung mittels Software ("bit-banging") durchgeführt werden muss.

Die von der synchron-seriellen Schnittstelle erzeugten Taktsignale werden bei diesem erfindungsgemäßen Verfahren nicht benötigt und können somit für alternative Aufgaben verwendet werden.

Damit erfordert dieses erfindungsgemäße Verfahren weniger Softwareaufwand mit geringerer Komplexität, so dass weniger Fehlerquellen entstehen und deshalb auch das Testen (SIL, safety integrity level) dieser einfacheren Software kostengünstiger ist. Damit ist auch der Vorteil einer geringeren Rechenleistung und eines geringeren Programmspeicherbedarfes zur Durchführung dieses erfindungsgemäßen Verfahrens verbunden. Schließlich kann der Einsatz dieses erfindungsgemäßen Verfahrens dazu führen, dass Aufgabenstellungen mit Mikrocomputern oder Mikrocontrollern durchführbar sind, die sonst wegen ihrer geringen Hardware-Ressourcen mit solchen Aufgaben überfordert wären.

In einer vorteilhaften Ausgestaltung der Erfindung ist es vorgesehen, dass nach einer Übertragung des Datenwortes im asynchronen Datenformat auf der Datenleitung der dem letzten Bit dieses Datenwortes entsprechende logische Pegel so lange bestehen bleibt, bis ein nächstes Datenwort im asynchronen Datenformat übertragen wird, um eine eindeutige und sichere Synchronisation auf die Datenübertragung des Datenempfangsgerätes sicherzustellen.

Besonders vorteilhaft ist es gemäß einer Weiterbildung der Erfindung, wenn die synchron-serielle Schnittstelle eine serielle Datenübertragung mit N Bits, bspw. mit N=10 (1 Byte) synchron mit einem Sendetakt dieser Schnittstelle übertragen kann, so dass zur Übertragung eines Datenwortes im asynchronen Datenformat Datensendegerätes, bspw. mit D=8 Datenbits und F Rahmenbits die N zu übertragenden Bits ergeben. Vorzugsweise werden mit F=2 als Rahmenbits ein Start-Bit an den Anfang des zu übermittelnden Datenwortes und ein Stopp-Bit am Ende des zu übermittelnden Datenwortes gesetzt. Weiterbildungsgemäß kann mit F=3 neben dem Start-Bit und dem Stopp-Bit das zu übermittelnde Datenwort zusätzlich mit einem Paritäts-Bit ergänzt werden, so dass hierfür eine serielle Datenübertragungsfähigkeit der synchron-seriellen Schnittstelle mit D=11 erforderlich wäre.

Es bietet sich weiterbildungsgemäß an, die synchron-serielle Schnittstelle als SPI (Serial Peripheral Interface)-Schnittstelle auszubilden, da deren Einsatz weit verbreitet ist. Wenn dabei diese synchron-serielle Schnittstelle zur asynchron-seriellen Datenübertragung gemäß dem UART-Standard so ausgebildet ist, das die Datenübertragung mit dem niederwertigsten Bit (LSB) beginnt, kann auf ein softwaremäßiges Spiegeln des zu übertragenden Datenworts verzichtet werden, da gemäß dem UART-Standard die Datenübertragung immer mit dem niederwertigsten Bit (LSB) beginnt.

Die Erfindung wird nachstehend anhand von Ausführungsbeispielen unter Bezugnahme auf die beigefügten Figuren ausführlich beschrieben. Es zeigen:
- Figur 1: eine schematische Darstellung einer Sender-Empfänger-Anordnung zur asynchron-seriellen Datenübertragung gemäß dem erfindungsgemäßen Verfahren,
- Figur 2: eine schematische Darstellung eines Ablaufdiagramms zur Erzeugung eines dem UART-Standard entsprechenden Datenwortes, und
- Figur 3: ein Zeit-Pegeldiagramm eines zu übertragenden Datenwortes gemäß UART-Standard und das zugehörige Takt-Signal.

Das Datensendegerät 10 ist als Mikrocomputer ausgebildet und weist eine SPI-Schnittstelle 11 als serielle Schnittstelle auf, die im Master-Modus zur Datenübertragung gemäß dem UART-Standard über eine Datenleitung 12 mit einem weiteren Mikrocomputer als Datenempfangsgerät 20 verbunden ist. Dieser Mikrocomputer 20 weist als Schnittstelle eine UART-Schnittstelle 21 mit einem Dateneingang 22 auf.

Die SPI-Schnittstelle 11 umfasst im einfachsten Fall wenigstens ein Schieberegister 11a als Senderegister auf und besitzt einen mit der Datenleitung 12 verbundenen Datenausgang MOSI (auch SDO genannt), wobei der üblicherweise vorgesehene Dateneingang MISO für die zweite Datenleitung nicht dargestellt ist. Ferner sind zwei Steuerleitungen 13 und 14 dieser SPI-Schnittstelle 10 dargestellt, die der Taktleitung CLK und dem Slave-Select (SS), auch Chip-Select (CS) genannt, entsprechen. Diese beiden Steuerleitung 13 und 14 werden nicht mit der UART-Schnittstelle 21 des Datenempfangsgerätes 20 verbunden.

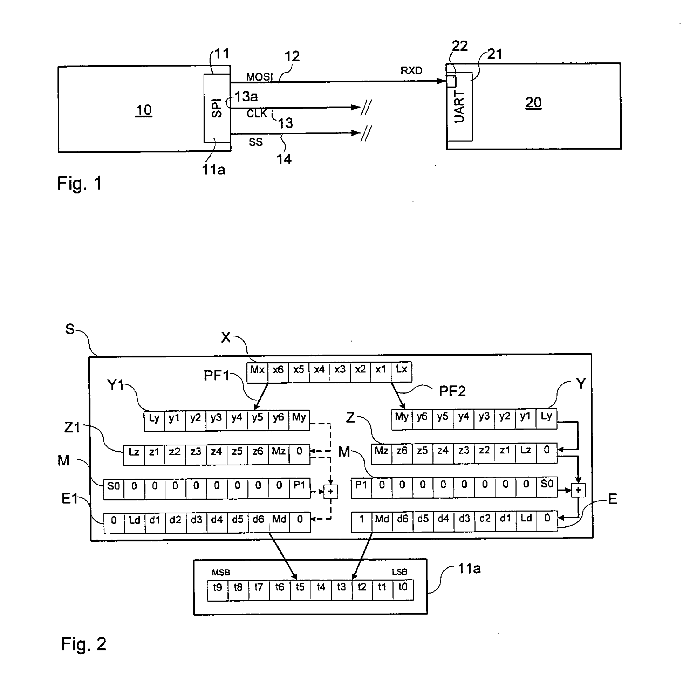

Diese SPI-Schnittstelle 11 erlaubt eine synchron-serielle Datenübertragung von mindestens N=10 Datenbits mit ihrem Sendetakt CLK. die Übertragung eines Datenwortes im asynchronen Datenformat gemäß UART-Standard über die Datenleitung 12 an die UART-Schnittstelle 21 des Mikrocomputers 20 wird im Folgenden im Zusammenhang mit Figur 2 erläutert.

Die Erzeugung eines binären Datenwortes im asynchronen UART-Datenformat aus einem zu übertragenden Datenwort X mit D=8 Datenbits X(0), ... X(D-1) wird in einem Softwareblock S der SPI-Schnittstelle 11 durchgeführt.

Gemäß Figur 2 sind in dem Softwareblock S zwei Pfade PF1 und PF2 dargestellt. Da im UART-Standard die Datenübertragung immer mit dem niederwertigsten Daten-Bit (LSB) beginnt, muss gegebenenfalls das Datenwort X gemäß Pfad PF1 in das Datenwort Y1 mit 8 Datenbits Y1 (0), ... Y1(D-1) gespiegelt werden. Liegt das Datenwort X bereits in der richtigen Reihenfolge vor, wird es als Datenwort Y mit 8 Datenbits Y(0), ... Y(D-1) übernommen. Im darauffolgenden Schritt werden in den beiden Pfaden PF1 und PF2 die Datenwörter Y1 und Y jeweils mit einem Bit0 mit 0 als neuem letztem Bit ergänzt, welches einer Multiplikation des Datenwortes Y1 bzw. Y mit 2 entspricht: Z1 = 2*Y1 bzw. Z = 2* Y. Dieser Vorgang entspricht einem Linksschieben des Datenwortes Y1 bzw. Y in einem Schieberegister.

Anschließend werden die beiden Datenwörter Z1 und Z durch Verknüpfung mit einer Bitmaske M mit zwei Rahmenbits, einem Start-Bit S0 und einem Stopp-Bit P1 ergänzt, so dass das zu übertragende Datenwort E1 bzw. E im asynchron-seriellen UART Datenformat vorliegt, wobei der Bitwert des Start-Bits S0 stets den Wert 0 und der Bitwert des Stopp-Bits P1 stets den Wert 1 aufweist.

Dieses Datenwort E1 bzw. E wird in das Schieberegister 11a geschoben, aus dem als Senderegister der SPI-Schnittstelle 11 dieses Datenwort zur Übermittlung über die Datenleitung 12 an die UART-Schnittstelle 21 des Mikrocomputers 20 seriell im Sendetakt der SPI-Schnittstelle ausgelesen wird. Mit einem Sendetakt von 2400 Hz wird eine Bitrate von 2400 Baud erzielt. Auch kann dieser Sendetakt so gewählt werden, dass Baudraten von 1200 oder 4800 entstehen.

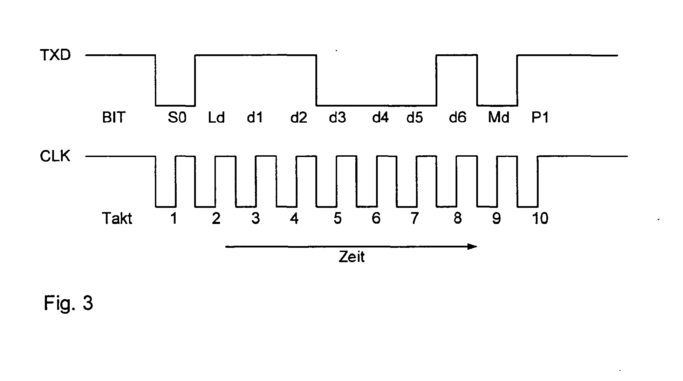

Die SPI-Schnittstelle 11 ist so ausgebildet, dass der Pegel auf der Datenleitung 12 nach der Übertragung des Datenwortes E1 bzw. E auf dem Pegel des zuletzt übertragenen Bits, also dem Stopp-Bit mit dem Bitwert 1 bestehen bleibt, also erst mit Übertragung des nächsten Datenwortes auf den Pegelwert des Start-Bits mit dem Bitwert 0 wechselt. Alternativ kann dies auch mit dem Mikrocontroller 10 realisiert werden, indem er die Kontrolle über die Datenleitung 12 übernimmt, so dass nach einer Datenübertragung bis zur nächsten Datenübertragung der dem Pegelwert 1 entsprechenden Ruhezustand beibehalten wird. Figur 3 zeigt einen beispielhaften Pegelverlauf TXD auf der Datenleitung 12 eines gemäß dem UART-Standard mit einem Start-Bit S0 und einem Stopp-Bit P1 ergänzten Datenwort E bzw. E1 mit den Datenbits d0, ... d7 mit zugehörigem Takt-Signal CLK, so dass die Datenübertragung mit dem niederwertigsten Bit (LSB) beginnt. Insbesondere ist aus dieser Figur zu erkennen, dass im Ruhezustand der Pegel auf der Datenleitung 12 auf dem Pegelwert 1, entsprechend dem Stopp-Bit P1 liegt.

In dem oben erläuterten Ausführungsbeispiel werden zur Erzeugung des asynchronen Datenformats lediglich ein Start-Bit und ein Stopp-Bit dem zu übertragenden Datenwort hinzugefügt. Entsprechend kann dem zu übertragenen Datenwort auch ein Paritätsbit hinzugefügt werden, das vor dem Stopp-Bit eingefügt wird. In diesem Fall muss zur Ergänzung mit F=3 Rahmenbits die SPI-Schnittstelle 11 zur Übertragung eines Datenwortes mit D=8 Datenbits so ausgelegt werden, dass N=11 Bits ohne Unterbrechung seriell gesendet werden können.

Die bei der asynchron-seriellen Datenübertragung gemäß UART-Standard nicht erforderlichen Anschlüsse für die weitere Datenleitung MISO (SDI) und die Steuerleitungen CLK und SS (Slave Select auch CS: Chip Select genannt) können für alternative Aufgaben verwendet werden, wenn die Hardware hierfür eingerichtet ist.

### Bezugszeichenliste

- 10: Datensendegerät, Mikrocomputer
- 11: Sendeschnittstelle, SPI-Schnittstelle
- 11a: Schieberegister, Senderegister der Sendeschnittstelle 11
- 12: Datenleitung
- 13: Steuerleitung, Taktleitung
- 13a: Taktausgang
- 14: Steuerleitung, SS-Leitung

- 20: Datenempfangsgerät, Mikrocomputer.
- 21: Empfangsschnittstelle, UART-Schnittstelle
- 22: Dateneingang der Empfangsschnittstelle 21

- E: M Bitmaske Datenwort
- E1: Datenwort
- X: Datenwort
- Y: Datenwort
- Y1: Datenwort
- Z: Datenwort
- Z1: Datenwort

## Patentansprüche

1. Verfahren zur unidirektionalen asynchron-seriellen Datenübertragung mit einem asynchronen Datenformat mit F (F∈N) Rahmenbits zwischen einer Sendeschnittstelle (11) eines Datensendegerätes (10) und einem Datenempfangsgerät (20) mit einer einen asynchron-seriellen Dateneingang aufweisenden seriellen Empfangsschnittstelle (21),
**dadurch gekennzeichnet, dass**
- die Sendeschnittstelle als synchron-serielle Schnittstelle (11) mit wenigstens einer Datenleitung (12) ausgebildet ist, wobei die Datenleitung (12) mit dem asynchron-seriellen Dateneingang der Empfangsschnittstelle (21) verbunden wird,
- ein von dem Datensendegerät (10) zu übermittelndes Datenwort mit D (DEN) Datenbits zur Erzeugung eines dem asynchronen Datenformat entsprechenden Formats mit F Rahmenbits ergänzt wird, und
- das mit den Rahmenbits ergänzte Datenwort in ein Senderegister (11a) zur Übertragung an das Datenempfangsgerät (20)gespeichert wird.

2. Verfahren nach Anspruch 1,
**dadurch gekennzeichnet, dass** nach einer Übertragung des Datenwortes im asynchronen Datenformat auf der Datenleitung (12) der dem letzten Bit dieses Datenwortes entsprechende logische Pegel so lange bestehen bleibt, bis ein nächstes Datenwort im asynchronen Datenformat übertragen wird.

3. Verfahren nach Anspruch 1 oder 2,
**dadurch gekennzeichnet, dass** synchron-serielle Schnittstelle (11) ausgebildet ist, eine serielle Datenübertragung von N Bits synchron mit einem Sendetakt dieser Schnittstelle (11) zu übertragen, wobei zur Übertragung eines Datenwortes im asynchronen Datenformat D Datenbits und F Rahmenbits N zu übertragende Bits ergeben.

4. Verfahren nach Anspruch 3,
**dadurch gekennzeichnet, dass** als Rahmenbits ein Start-Bit an den Anfang des zu übermittelnden Datenwortes und ein oder mehrere Stopp-Bit(s) am Ende des zu übermittelnden Datenwortes gesetzt werden.

5. Verfahren nach Anspruch 4
**dadurch gekennzeichnet, dass** das zu übermittelnde Datenwort neben dem Start-Bit und einem oder mehreren Stopp-Bit(s) zusätzlich mit einem Paritäts-Bit ergänzt wird.

6. Verfahren nach einem der vorhergehenden Ansprüche,
**dadurch gekennzeichnet, dass** die synchron-serielle Schnittstelle als SPI (Serial Peripheral Interface)-Schnittstelle (11) ausgebildet ist.

7. Verfahren nach einem der vorhergehenden Ansprüche,
**dadurch gekennzeichnet, dass** die synchron-serielle Schnittstelle (11) derart ausgebildet ist, dass die Datenübertragung mit dem niederwertigsten Bit (LSB) beginnt.

8. Verfahren nach einem der Ansprüche 1-6,
**dadurch gekennzeichnet, dass**
das zu übermittelnde Datenwort so zusammenstellt ist, dass die Datenübertragung mit dem niederwertigsten Bit (LSB) beginnt.

9. Verfahren nach einem der vorhergehenden Ansprüche,
**dadurch gekennzeichnet, dass** das asynchrones Datenformat dem UART (Universal Asynchronous Receiver/Transmitter)-Standard entspricht.

10. Verfahren nach einem der vorhergehenden Ansprüche,
**dadurch gekennzeichnet, dass** es in einem Sensor oder in einem Aktor oder in einem Feldgerät oder in einem Messgerät oder in einem Auswertgerät oder in einem Bediengerät oder in einem Kommunikationsgerät verwendet wird.
